Europäisches Patentamt

European Patent Office

Office européen des brevets

(11) Veröffentlichungsnummer: **0 140 318**

**A1**

(12) **EUROPÄISCHE PATENTANMELDUNG**

(21) Anmeldenummer: **84112679.0**

(22) Anmeldetag: **20.10.84**

(51) Int. Cl.⁴: **A 01 C 5/06**
**F 16 H 3/60**

(30) Priorität: **31.10.83 US 547538**

(43) Veröffentlichungstag der Anmeldung:
**08.05.85 Patentblatt 85/19**

(84) Benannte Vertragsstaaten:
**DE FR GB**

(71) Anmelder: **DEERE & COMPANY**
**1 John Deere Road**
**Moline Illinois 61265(US)**

(72) Erfinder: **Harbert, Jimmy Don**
**1309 W. 2nd Street**
**Coal Valley Illinois 61240(US)**

(74) Vertreter: **Sartorius, Peter et al,**
**DEERE & COMPANY European Office, Patent**
**Department Postfach 503 Steubenstrasse 36-42**
**D-6800 Mannheim 1(DE)**

(54) **Höhenstellvorrichtung für ein Säorgan.**

(57) Die Höhenstellvorrichtung für ein Säorgan besteht aus einem Hebelarm (25, 36) zur Höhenverstellung von Laufrädern (16). Der Hebelarm (25) wird über eine Gewindestange (38) verschwenkt, die hierzu über eine Gewindemuffe und Führungselemente mit einem weiteren Hebelarm (25) des Laufrades (16) verbunden ist. Die Gewindestange (38) ist mit einer vorwärts und rückwärts laufenden, antreibbaren Welle (50) antriebsmäßig verbunden, so daß durch Drehen dieser Welle die Laufräder in eine bestimmte Position gebracht werden können.

FIG. 2

## Höhenstellvorrichtung für ein Säorgan

Die Erfindung bezieht sich auf eine Höhenstellvorrichtung für ein Säorgan mit einer Furchenöffnereinrichtung und nachgeordneten Druckrollen, wobei die Höhenstellvorrichtung einen Hebelarm zur Verschwenkung von Laufrädern aufweist.

Es ist eine Höhenstellvorrichtung für die Säorgane einer Sämaschine bekannt (US-A-4 009 668), die aus einem am Rahmen schwenkbar gelagerten zweiarmigen Hebel besteht, der einenends mit dem schwenkbar gelagerten Laufrad in Verbindung steht, um dieses abwärts bzw. aufwärts zu bewegen, und anderenends mit einem Handstellteil. Eine derartige Verstellung des Laufrades ist relativ schwierig.

Der Erfindung liegt die Aufgabe zugrunde, die Höhenstellvorrichtung für ein Säorgan mittels eines verschwenkbar gelagerten Laufrades derart auszubilden und anzuordnen, daß auf relativ einfache Weise eine Verstellung zahlreicher nebeneinander angeordneter Säorgane ohne weiteres möglich ist. Diese Aufgabe ist dadurch gelöst worden, daß die Höhenstellvorrichtung eine quer zur Bewegungsrichtung des Säorganes verlaufende, mit dem Hebelarm verbundene Welle aufweist, die über eine Doppelkupplung wahlweise für Vorwärts- und Rückwärtslauf mit einer Antriebsvorrichtung verbindbar ist. Da die Höhenstellvorrichtung eine quer zur Fahrtrichtung verlaufende Welle aufweist, die über eine Doppelkupplung wahlweise für Vorwärts- und Rückwärtslauf antreibbar ist, lassen sich auf einfache Weise über eine einzige Welle mehrere nebeneinander angeordnete Säorgane ohne weiteres in der Höhe verstellen, da hierzu ein jeder Hebelarm der entsprechenden Sävorrichtung mit der Welle antriebsverbindbar ist. Hierzu ist es ferner vorteilhaft, daß die getriebene Welle über die Doppelkupplung mit einer treibenden Welle wahlweise für Vorwärts- und Rückwärtsfahrt verbindbar ist und eine oder mehrere Gewindestangen zur Verschwenkung eines jeden Hebelarms des entsprechenden Säorgans an die Welle angeschlossen sind. Ferner ist es vorteilhaft, daß die getriebene Welle an das eine Ende einer Gewindestange angeschlossen ist und diese antreibt, die mit ihrem anderen Ende an den eine Gewindemuffe aufweisenden Hebelarm zur Höhenverstellung der Laufräder angeschlossen ist, wobei durch Drehen der Gewindestange in die eine oder andere Richtung der Hebelarm und zwangsweise die Laufräder verstellt werden, deren Hebelarm an dem einen Ende eines doppelarmigen Hebelarmes anliegt, dessen anderes oberes Ende über ein Führungselement mit der Gewindestange verbunden ist. Um die Drehbewegung von der quer verlaufenden Welle auf eine in Fahrtrichtung der Maschine verlaufende Welle zu übertragen, können im Bereich der Verbindung zwischen der Welle und dem Gestänge Getriebeteile vorgesehen sein. Die Verwendung eines Gestänges ermöglicht die Abnahme des Antriebes für zahlreiche nebeneinander angeordnete Sävorrichtungen. Dabei wird der entsprechende Hebelarm zur Verschwenkung des Laufrades und somit zur Höhenverstellung der Sävorrichtung über ein besonderes Gewindegestänge angetrieben, so daß man insgesamt eine relativ einfache und kostengünstige Vorrichtung erhält. Hierzu ist es vorteilhaft, daß die Gewindestange über ein erstes Universalgelenk bzw. Gelenklager, ein Gestänge und ein zweites Universalgelenk bzw. Gelenklager mit der getriebenen Welle antriebsmäßig verbunden ist.

In weiterer Ausgestaltung der Erfindung ist es vorteilhaft, daß die getriebene Welle über ein Sonnenrad und Planetenräder mit einem Ringzahnrad antriebsverbunden ist, das über einen Kettentrieb mit einem Antriebszahnrad antriebsverbunden ist, das auf der treibenden Welle angeordnet ist, wobei über die Doppelkupplung wahlweise die Achsen der Planetenräder mit dem Sonnenrad oder das Ringzahnrad festlegbar ist, und daß die Doppelkupplung aus einer über einen Schwenkhebel betätigbaren Hülse besteht, die auf ihren beiden Stirnseiten je eine Verzahnung aufweist, die mit der
Stirnverzahnung eines auf der Welle vorgesehenen Flansches
zur drehfesten Verbindung des Sonnenrades mit den Planetenrädern oder mit der Stirnverzahnung eines auf der Welle
vorgesehenen stationären Ringes zur Drehung der Planetenräder um ihre eigenen Achsen und zum Antrieb der getriebenen Welle entgegengesetzt zum Ringzahnrad verbindbar
ist. Die Verwendung einer Doppelkupplung ermöglicht es auf
einfache Weise, die antreibbare Welle entweder vorwärts
oder rückwärts laufen zu lassen und somit das Gestänge
zur Verstellung des Hebelarmes entsprechend anzutreiben.

Im folgenden wird die Erfindung anhand von lediglich einen
Ausführungsweg darstellenden Zeichnungen näher erläutert.
Es zeigt:

Fig. 1    eine perspektivische Darstellung einer
bekannten Sämaschine,

Fig. 2    eine Seitenansicht der erfindungsgemäßen
Sämaschine,

Fig. 3    eine Schnittdarstellung einer Kupplungsvorrichtung mit einem zugehörigen Planetengetriebe,

Fig. 4    eine Seitenansicht des Planetengetriebes.

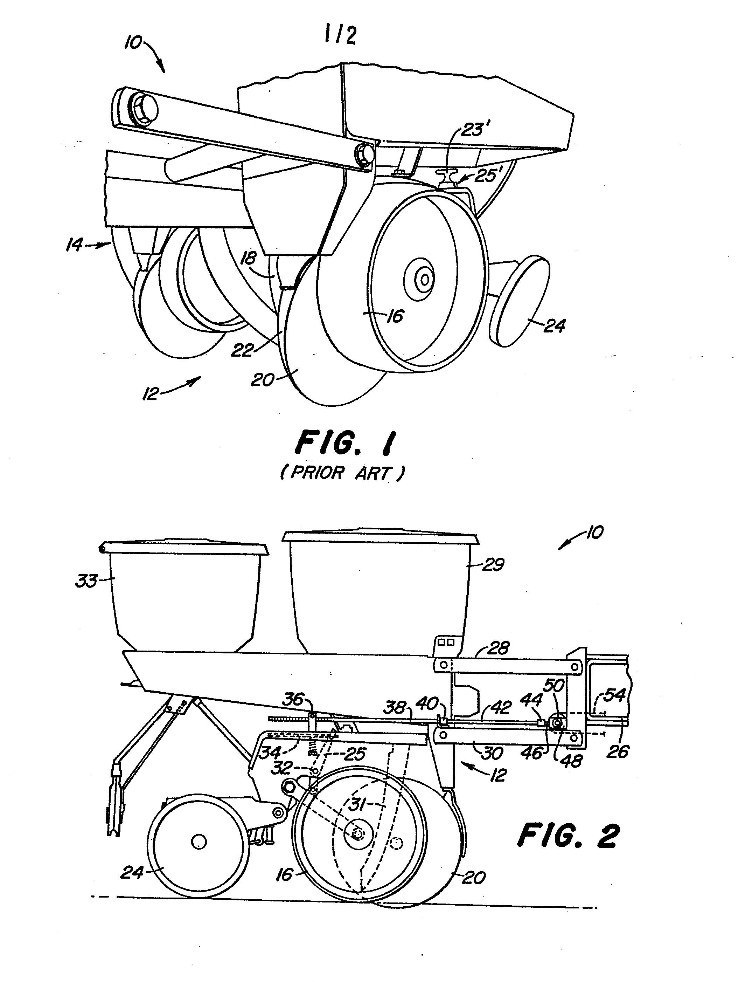

In der Zeichnung ist in Fig. 1 mit 10 eine Sävorrichtung
einer in der Zeichnung nicht weiter dargestellten Sämaschine bezeichnet, die zahlreiche nebeneinander angeordnete Säorgane aufweist, wobei in der Zeichnung lediglich
zwei Säorgane 12 und 14 dargestellt sind. Die Sävorrichtung 10 bzw. ein jedes Säorgan 12 sind mit Laufrädern 16
und 18 ausgerüstet, die vertikal verschwenkbar angeordnet
sind, um die Scheiben 20 und 22 der Furchenöffnereinrichtung auf- und abwärts bewegen zu können (siehe Fig. 2).

Die Scheiben 20 und 22 sind mittels Achsen drehbar gelagert und V-förmig zueinander angeordnet. Hinter den Scheiben 20 und 22 befindet sich jeweils eine Druckrolle 24, mittels der die Furchen nach erfolgter Saatgutablage geschlossen werden.

Ein Handgriff 23 gehört zu einer Höhenstellvorrichtung 25' (siehe auch Fig. 1). Die Höhenstellvorrichtung 25' ist, wie aus Fig. 2 hervorgeht, mit den Laufrädern 16 und 18 entsprechend verbunden.

Wie aus Fig. 2 hervorgeht, ist die Sävorrichtung 10 an einen Querträger 26 angeschlossen, der mit einem in der Zeichnung nicht dargestellten Schlepper verbindbar sein kann. Das Säorgan 12 bzw. 14 ist, wie insbesondere aus Fig. 2 hervorgeht, über parallel verlaufende Lenker 28 und 30 mit dem Querträger 26 gelenkig und somit höhenverstellbar verbunden, so daß die einzelnen Säorgane 12 und 14 ohne weiteres der Bodenkontur folgen können, wenn ein sehr unebenes Gelände vorliegt.

Die Sävorrichtung 10 ist mit einem Sammelbehälter 29 für Saatgut ausgerüstet, der über ein Saatrohr 31 das Saatgut in den Boden ablegt, während ein weiterer Sammelbehälter 33 zur Aufnahme von Herbiziden bzw. Insektiziden dient.

Die Höhenstellvorrichtung 25 bzw. der zugehörige Hebel sind mittels eines Gelenkbolzens 32 an die Vorderseite der Sävorrichtung 10 angeschlossen (siehe rechte Seite Fig. 2). Durch Verstellung der Höhenstellvorrichtung 25 kann das Laufrad 16 angehoben bzw. abgesenkt werden, um die Sävorrichtung in die gewünschte Arbeitsposition zu bringen, da das Laufrad 16 normalerweise ständig in Kontakt mit dem Boden ist und durch Verstellung des Laufrades 16 die Sävorrichtung entweder angehoben oder abgesenkt wird und somit die Saatrille zur Aufnahme des Saatgutes entweder größer oder kleiner ausgebildet ist.

Die Höhenstellvorrichtung 25 wird über eine nicht näher erläuterte Stellvorrichtung betätigt, beispielsweise über den in der Zeichnung in Fig. 1 dargestellten Handgriff 23'. Wie aus Fig. 2 hervorgeht, wird die Stellung der Höhenstellvorrichtung 25 durch ein Führungselement 34 gesteuert, das mit einem Hebelarm 36 verbunden ist, der zur Aufnahme einer Gewindestange 38 eine entsprechende Mutter aufweist. Im Bereich der Mitte der Gewindestange 38 ist diese in einem Gelenklager 40 aufgenommen, wobei das der Gewindestange gegenüberliegende Ende 42 an ein Gelenk 44 angeschlossen ist. Das Ende 42 der Gewindestange 38 steht ferner mit einer kurzen Welle 46 eines Getriebes 48 in Verbindung, um die Drehbewegung einer Welle 50 in eine Längsbewegung auf die Welle 46 sowie die Gewindestange 38 zu übertragen.

Die Welle 50, die als Steuerwelle ausgebildet ist, dreht sich um eine quer zur Fahrtrichtung der Sämaschine verlaufende Achse und erstreckt sich hier über die gesamte Breite der Sävorrichtung. Sie ist hierzu mit dem Getriebe 48 eines jeden Säorganes 12 wirkungsmäßig verbunden. Wird beispielsweise die Welle 50 in die erste Richtung gedreht, so werden hierdurch die Welle 46 sowie die Gewindestange 38 in eine Richtung gedreht und dadurch der zugehörige Hebelarm 36 in Längsrichtung bewegt und somit wiederum die Höhenstellvorrichtung 25. Durch Drehen der Welle 50 in die entgegengesetzte Richtung wird ebenso eine Verstellung der Gewindestange 38 und somit des Hebelarmes 36 und der Höhenstellvorrichtung 25 herbeigeführt.

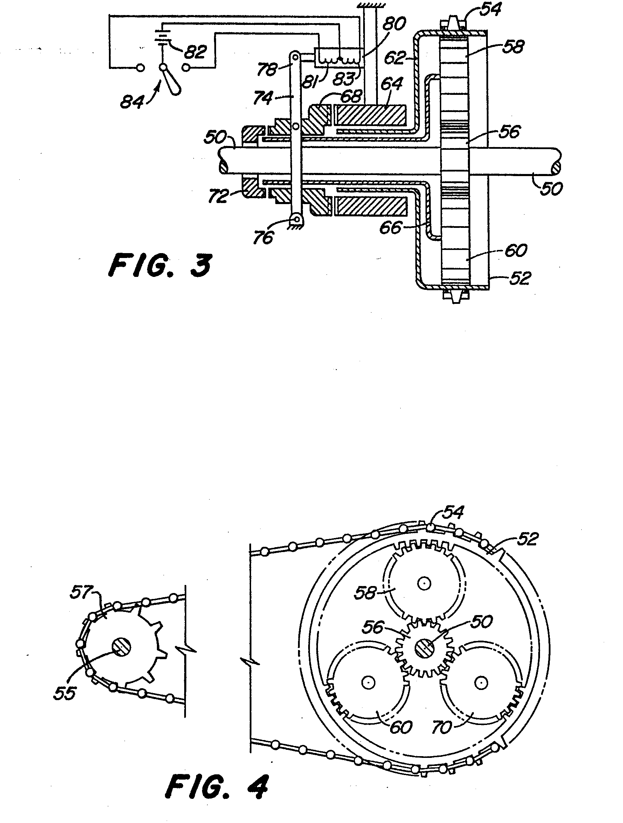

Eine entsprechende Drehung der Welle 50 in die eine oder die andere Richtung ist durch die Vorrichtung gemäß Fig. 3 veranschaulicht. Diese Stellvorrichtung dient zur Verstellung der einzelnen Höhenstellvorrichtungen 25 für die einzelnen Säorgane.

Eine ständige Drehung in einer Richtung wird durch ein Ringzahnrad 52 herbeigeführt, das über einen Kettentrieb 54 mit
einem Antriebszahnrad 57 in Antriebsverbindung steht, das
auf einer Welle 55 der Sävorrichtung 10 gelagert ist. Solange die Sämaschine sich im Arbeitseinsatz befindet und
über das Feld fährt, wird die Welle 50 ständig in eine
Richtung angetrieben. Eine Drehrichtungsumkehr der Welle 50
erfolgt mittels eines Planetengetriebes und einer Doppelkupplung (Fig. 3).

In Fig. 3, 4 ist das aus den Sonnenrädern 56, den Planetenrädern 58, 60, 70 und dem Ringzahnrad 52 gebildete Planetenradgetriebe veranschaulicht. Das Ringzahnrad 52 steht über
einen Mitnehmerteil bzw. einen Hüllgetriebeteil 62 mit
einem Ring 64 in Wirkverbindung, der hierzu mit einer
Bohrung versehen ist, in die sich der Hüllgetriebeteil 62
erstreckt. Ein weiterer Hüllgetriebeteil 66 steht ebenfalls
über in der Zeichnung nicht dargestellte Verbindungsmittel
mit dem Hüllgetriebeteil 62 mittelbar in Antriebsverbindung
und erstreckt sich in den Ring 64 sowie eine sich anschließende dritte Hülse 68. Die Hülse 68 ist mit Bezug auf den
Hüllgetriebeteil 66 axial auf der Welle 50 verstellbar,
jedoch mit dieser drehfest verbunden. Wie aus Fig. 3 hervorgeht, dient der Hüllgetriebeteil 66 zur Aufnahme der
Planetenräder 58, 60 und 70. Hierdurch wird eine Drehbewegung der einzelnen Planetenräder 58, 60 und 70 ermöglicht,
wenn der Hüllgetriebeteil 66 sich dreht.

Ein Flansch 72 ist ferner mit der Welle 50 im Bereich der
Stirnseite der Hülse 68 drehfest verbunden. Ein Schwenkhebel 74 ist über einen Gelenkbolzen 76 mit einer fest
angeordneten Halterung verbunden. Durch Verstellen des
Schwenkhebels 74 kann die Hülse 68 mit Bezug auf Fig. 3
entweder nach links oder nach rechts verschoben werden
und dabei in Wirkverbindung mit dem Ring 64 bzw. dem
Flansch 72 gebracht werden. Hierzu weisen der Flansch 72
und die Hülse 68 entsprechende Kupplungselemente, beispielsweise eine Verzahnung, auf, die mit einer entsprechenden Verzahnung der Hülse 68 in Eingriff bringbar ist. Werden beispielsweise die Verzahnungen der Hülse 68 und des Ringes 64 miteinander in Eingriff gebracht, so ist dadurch eine gegenseitige Verdrehung dieser Teile ausgeschlossen. Das obere freie Ende 78 des Schwenkhebels 74 ist an ein Gestänge eines in der Zeichnung nicht weiter dargestellten Spulenkerns einer Spule 80 angeschlossen. Die Spule 80 weist hierzu entsprechende Einzelspulen 81 und 83 auf, die mit einer Batterie 82 verbunden sind, so daß durch entsprechende Beaufschlagung der einen oder anderen Spule 81 bzw. 83 eine entsprechende Verstellung des Spulenkerns in die eine bzw. in die andere Richtung erfolgt. Wie aus Fig. 3 ferner hervorgeht, ist die Batterie 82 an einen Doppelschalter 84 angeschlossen, der durch entsprechende Verstellung entweder die Spule 81 oder die Spule 83 an die Batterie 82 anschließt. Wird den Spulen 81 und 83 kein Strom zugeführt, befindet sich der Doppelschalter 84 in der in Fig. 3 dargestellten Neutralstellung, so daß dann auch die Hülse 68 über in der Zeichnung nicht dargestellte Federn in einer Mittelstellung gehalten wird.

Befindet sich also die Hülse 68 in einer Mittelstellung, so besteht auch keine Antriebsverbindung zwischen dem Flansch 72 und der Hülse 68 sowie dem Ring 64 und der Hülse 68. Somit wird über die Planetenräder 58, 60 und 70 die Drehbewegung des Ringzahnrades 52 nicht auf die Welle 50 übertragen, und die Achsen des Hüllgetriebeteils 66 drehen sich somit frei um das Sonnenrad 56, das drehfest mit der Welle 50 verbunden ist.

Wird beispielsweise die Spule 81 mit Strom versorgt, so wird die Hülse 68 mit dem Flansch 72 in Antriebsverbindung gebracht, während durch Stromversorgung der Spule 83 eine Antriebsverbindung zwischen der Hülse 68 und dem Ring 64 hergestellt wird. Ist eine Antriebsverbindung zwischen dem Flansch 72 und der Hülse 68 hergestellt, so sind die Planetenräder 58, 60 und 70 festgelegt, so daß die Welle 50 mit dem Ringzahnrad 52 in die gleiche Richtung dreht. Wird beispielsweise die Hülse 68 mit dem Ring 64 drehfest verbunden, so können die Planetenräder 58, 60 und 70 sich um ihre eigenen (nun stationären) Achsen drehen, so daß dadurch das Sonnenrad 56 und die Welle 50 entgegengesetzt zur Drehung des Ringzahnrades 52 angetrieben werden. Durch die zuvor beschriebene Drehung der Welle 50 wird auch entsprechend die Höhenstellvorrichtung 25 verstellt, um die Säorgane 12 entsprechend anzuheben bzw. abzusenken. Hierzu wird der Doppelschalter 84 entweder in eine Anhebe- oder Absenkstellung verstellt, so daß die Furchenöffnungsorgane der Sävorrichtung angehoben bzw. abgesenkt werden, wobei der Stellvorgang solange ausgeführt wird, solange der Doppelschalter 84 in seiner entsprechenden Anhebe- bzw. Absenkstellung verschwenkt bleibt.

Patentansprüche

1. Höhenstellvorrichtung (25) für ein Säorgan (12) mit einer Furchenöffnereinrichtung und nachgeordneten Druckrollen (24), wobei die Höhenstellvorrichtung einen Hebelarm (36) zur Verschwenkung von Laufrädern (16) aufweist, dadurch gekennzeichnet, daß die Höhenstellvorrichtung eine quer zur Bewegungsrichtung des Säorganes verlaufende, mit dem Hebelarm (36) verbundene Welle (50) aufweist, die über eine Doppelkupplung wahlweise für Vorwärts- und Rückwärtslauf mit einer Antriebsvorrichtung verbindbar ist.

2. Höhenstellvorrichtung nach Anspruch 1, dadurch gekennzeichnet, daß die getriebene Welle (50) über die Doppelkupplung mit einer treibenden Welle (55) wahlweise für Vorwärts- und Rückwärtsfahrt verbindbar ist und eine oder mehrere Gewindestangen (38) zur Verschwenkung eines jeden Hebelarms (36) des entsprechenden Säorgans an die Welle (50) angeschlossen sind.

3. Höhenstellvorrichtung nach Anspruch 1 oder 2, dadurch gekennzeichnet, daß die getriebene Welle (50) an das eine Ende einer Gewindestange (38) angeschlossen ist und diese antreibt, die mit ihrem anderen Ende an den eine Gewindemuffe aufweisenden Hebelarm (36) zur Höhenverstellung der Laufräder (16) angeschlossen ist, wobei durch Drehen der Gewindestange in die eine oder andere Richtung der Hebelarm (25) und zwangsweise die Laufräder (16) verstellt werden, deren Hebelarm an dem einen Ende eines doppelarmigen Hebelarmes (25) anliegt, dessen anderes oberes Ende über ein Führungselement (34) mit der Gewindestange (38) verbunden ist.

4. Höhenstellvorrichtung nach einem oder mehreren der vorherigen Ansprüche, dadurch gekennzeichnet, daß die Gewindestange (38) über ein erstes Universalgelenk bzw.

Gelenklager (40), ein Gestänge (42) und ein zweites
Universalgelenk bzw. Gelenklager (44) mit der getriebenen Welle (50) antriebsmäßig verbunden ist.

5. Höhenstellvorrichtung nach einem oder mehreren der vorherigen Ansprüche, dadurch gekennzeichnet, daß die getriebene Welle (50) über ein Sonnenrad (56) und Planetenräder (58) mit einem Ringzahnrad (52) antriebsverbunden ist, das über einen Kettentrieb (54) mit einem
Antriebszahnrad (57) antriebsverbunden ist, das auf der
treibenden Welle (55) angeordnet ist, wobei über die
Doppelkupplung wahlweise die Achsen der Planetenräder
(58, 60, 70) mit dem Sonnenrad (56) oder das Ringzahnrad festlegbar ist.

6. Höhenstellvorrichtung nach einem oder mehreren der vorherigen Ansprüche, dadurch gekennzeichnet, daß die Doppelkupplung aus einer über einen Schwenkhebel (74) betätigbaren Hülse (68) besteht, die auf ihren beiden
Stirnseiten je eine Verzahnung aufweist, die mit der
Stirnverzahnung eines auf der Welle (50) vorgesehenen
Flansches (72) zur drehfesten Verbindung des Sonnenrades mit den Planetenrädern (58, 60, 70) oder mit der
Stirnverzahnung eines auf der Welle (50) vorgesehenen
stationären Ringes (64) zur Drehung der Planetenräder
(58, 60, 70) um ihre eigenen Achsen und zum Antrieb der
getriebenen Welle (50) entgegengesetzt zum Ringzahnrad
verbindbar ist.

FIG. 1

(PRIOR ART)

FIG. 2

FIG. 3

FIG. 4

**0140318**
Nummer der Anmeldung

EP   84 11 2679

## EUROPÄISCHER RECHERCHENBERICHT

Europäisches
Patentamt

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | US-A-4 009 668   (R.W. BRASS et al.)<br>* Spalte 3, Zeilen 27-31; Figur 1 * | 1 | A 01 C   5/06<br>F 16 H   3/60 |
| A | US-A-3 439 749   (N.O. OLSSON)<br>* Figur 1 * | 1 | |
| A | DE-A-3 117 536   (F. KIRCHBERGER)<br>* Anspruch 1, Figur 2 * | 1,2 | |
| A | DE-A-1 902 125   (IMPERIAL CHEMICAL INDUSTRIES LTD.)<br>* Seite 6, Zeilen 5-11 * | 1 | |
| A | AT-B-   22 557 (CH.F. JAEHN et al.)<br>* Vollständiges Dokument * | 1,5 | |

RECHERCHIERTE SACHGEBIETE (Int. Cl.4)

A 01 B   63/00
A 01 C    5/00
A 01 C    7/00
A 01 C   15/00

Der vorliegende Recherchenbericht wurde für alle Patentansprüche erstellt.

| Recherchenort | Abschlußdatum der Recherche | Prüfer |
|---|---|---|
| BERLIN | 19-12-1984 | WUNDERLICH J E |